# EUROPÄISCHE PATENTSCHRIFT

(11) **EP 4 180 022 B1**
(45) Veröffentlichungstag und Bekanntmachung des Hinweises auf die Patenterteilung: **11.02.2026**
(21) Anmeldenummer: 22207612.7
(22) Anmeldetag: 15.11.2022
(51) Int. Cl.: A61G 3/06, B60P 1/44, B66B 9/08

(54) **LADEVORRICHTUNG FÜR EIN FAHRZEUG ODER EIN GEBÄUDE**
LOADING DEVICE FOR A VEHICLE OR A BUILDING
DISPOSITIF DE CHARGEMENT POUR UN VÉHICULE OU UN BÂTIMENT

(30) Priorität: 15.11.2021 DE 102021129774
(43) Veröffentlichungstag der Anmeldung: 17.05.2023
(73) Patentinhaber: EWO Fluid Power GmbH, 73277 Owen (DE)
(72) Erfinder: Evesque, Christian, 73275 Ohmden (DE)
(74) Vertreter: Schrooten, Rolf

(56) Entgegenhaltungen:
- EP-B1- 3 335 933
- WO-A1-2014/138797
- FR-A1- 3 102 727

## Beschreibung

Die Erfindung betrifft eine Ladevorrichtung für ein Fahrzeug, insbesondere für ein Kraftfahrzeug wie beispielsweise ein Wohnmobil, oder für ein Gebäude nach dem Oberbegriff von Anspruch 1. An Fahrzeugen kann sie sowohl zum Be- und Entladen des Fahrzeugs mit Gegenständen als auch als Ein- und Ausstiegshilfe für Passagiere, beispielsweise für gehbehinderte Personen oder auch für Rollstuhlfahrer eingesetzt werden. In Gebäuden kann die Vorrichtung beispielsweise auch zum Überwinden von Hindernissen eingesetzt werden. Eine derartige Ladevorrichtung umfasst eine Hebeplattform, zwei seitlich beabstandet voneinander an dem Fahrzeug oder an dem Gebäude montierte oder montierbare horizontale Schienenführungen, die jeweils eine an dem Fahrzeug bzw. an dem Gebäude befestigte oder befestigbare ortsfeste Führungsschiene und wenigstens eine an der ortsfesten Führungsschiene längsverschiebbar geführte bewegliche Führungsschiene aufweisen, und zwei Hydraulikzylinder, die jeweils ein Zylinderrohr, einen verschiebbar in dem Zylinderrohr geführten Kolben und eine mit dem Kolben verbundene Kolbenstange aufweisen. Dabei sind die beiden Schienenführungen seitlich horizontal beabstandet voneinander und die beiden Zylinderrohre parallel zueinander und seitlich beabstandet voneinander angeordnet. Jedes Zylinderrohr ist mit lediglich einer der beweglichen Führungsschienen derart starr verbunden, dass das Zylinderrohr und die damit verbundene bewegliche Führungsschiene eine vertikal ausgerichtete Anordnungsebene definieren. Dabei sind die beiden Kolbenstangen jeweils starr mit der Hebeplattform verbunden.

Zur Zugänglichmachung von Fahrzeugen sind verschiedene Einstieghilfen und Ladevorrichtungen bekannt. Beispielsweise können als Einstieghilfen elektrisch horizontal ein- und ausfahrbare Treppenstufen an Fahrzeugen verbaut werden. Eine Treppenstufe kann jedoch nur von gesunden Menschen genutzt werden, nicht beispielsweise von einem Rollstuhlfahrer. Aus dem Krankentransportbereich sind außerdem Ladevorrichtungen bekannt, die elektrohydraulisch Rollstuhlfahrer vom Fahrzeugboden auf einen Boden und wieder zurück befördern können. Solche Systeme sind meist unter dem Fahrzeugboden verbaut und relativ komplex in ihrer Ausführung. Aus dem Gebäudetechnikbereich sind kleine handelsübliche Aufzüge bekannt, bei denen der technische Aufwand üblicherweise sehr hoch ist.

Aus der EP 2 260 818 A1 ist ein Ladelift für ein Fahrzeug, insbesondere für ein Kraftfahrzeug und/oder zur Überwindung von Höhenunterschieden in einem Gebäude, an einer Verkehrsmittelrampe oder dergleichen bekannt. Der Ladelift weist ein am Fahrzeug und/oder an einer Wand- und/oder Bodenfläche in dem Gebäude, an der Verkehrsmittelrampe oder dergleichen zu befestigendes Haltegestell, einen am Haltegestell in einer ersten Richtung hin- und her bewegbaren Laufwagen und eine am Laufwagen montierbare Ladevorrichtung auf, die in einer zur ersten Richtung im Wesentlichen senkrechten, zweiten Richtung zwischen einer Ladestellung und einer Transportstellung hin- und her bewegbar ist. Das Haltegestell, der Laufwagen und die Ladevorrichtung bestehen jeweils aus je einem Modul, wobei diese Module wahlweise einzeln handhabbar oder zur Herstellung einer gebrauchsfertigen Baueinheit ineinander steckbar und lösbar miteinander verbindbar sind.

Aus der DE 93 20 036 U1 ist eine ausfahrbare, heb- und senkbare Plattform für ein Transport-Kraftfahrzeug bekannt, bei dem die Plattform im nicht benutzten Zustand zu einem flachen Paket zusammengeklappt ist.

Aus der DE 299 13 723 U1 ist eine Vorrichtung zum Be- und Entladen des Laderaumes eines Nutzfahrzeugs bekannt, die eine an einer Hubvorrichtung befestigte Ladeplattform aufweist, welche an einem senkrechten Träger auf- und ab bewegbar geführt ist. Der senkrechte Träger ist im Laderaum horizontal mindestens über die Bordkante der Ladefläche des Laderaumes und/oder der Karosserie des Nutzfahrzeugs hervorziehbar angeordnet und mindestens in einer hervorgezogenen Stellung arretierbar.

Aus der DE 10 2005 036 590 A1 ist ein Fahrzeug, insbesondere auf Basis eines Reisebus-Fahrgestells, wie beispielsweise ein Wohnmobil bekannt, das mindestens zwei Achsen und eine Aufnahme für beispielsweise einen Personenkraftwagen aufweist. Die Aufnahme ist in einer Längsrichtung des Fahrzeugs zwischen den Achsen mit einer Be- und Entlademöglichkeit zur Längsseite des Fahrzeugs hin ausgebildet und weist einen quer zur Längsachse des Fahrzeugs verfahrbaren Aufnahmeboden auf.

Aus der EP 2 653 142 A1 ist eine Hubvorrichtung zur Aufnahme von Lasten, insbesondere eines Rollstuhls in einem Transportfahrzeug bekannt. Die Hubvorrichtung besteht aus einem auf dem Fahrzeugboden horizontal zum Aus- und Einfahren aus dem Fahrzeug verschiebbar gehaltenen Rahmenteil und einer am Rahmenteil verstellbar gehaltenen Hubplatte. Die Hubplatte ist in einer Ausfahrstellung des Rahmenteils von diesem zur barrierefreien Aufnahme von Lasten fahrzeugaußenseitig in horizontaler Lage von einer Hubstellung auf den Boden in eine Absenkstellung absenkbar und wieder in die angehobenen Hubstellung zusammen mit den aufgebrachten Lasten anhebbar. Das Rahmenteil ist von der Ausfahrstellung zusammen mit der angehobenen Hubplatte und den aufgebrachten Lasten, insbesondere mit wenigstens einem Rollstuhl in eine Grundstellung in das Fahrzeug einfahrbar.

Aus der DE 31 23 546 A1 ist ein Rollstuhl- und Lastenlift zum Beladen und Entladen eines Fahrzeuges bekannt, dessen Ladefläche durch eine Öffnung in einer Seite des Fahrzeugaufbaus zugänglich ist. Der Lift besteht aus einem am Fahrzeug abgestützten geneigten Halterohr, einem darin geführten, höhenverstellbaren Teleskopglied sowie aus einer Ladeplattform, die an das untere Ende des Teleskopgliedes angeschlossen und um eine sich entlang einer ihrer Seiten erstreckende waagerechte Schwenkachse zwischen einer waagerechten Betriebsstellung und einer aufrechten Ruhestellung beweglich ist. Das Halterohr ist ortsfest über der Ladefläche derart angeordnet, dass der lineare Verstellweg von Teleskopglied und Ladeplattform quer über die Ladeflächenkante hinweggeführt ist. Als Anschluss der Ladeplattform ist an das untere Ende des Teleskopgliedes eine Schwenkverbindung mit senkrechter Schwenkachse vorgesehen.

Aus der EP 0 715 986 A1 ist eine Ladevorrichtung für Fahrzeuge bekannt, die eine bewegbare Ladeplattform, Mittel zum horizontalen Ausfahren der Ladeplattform und Mittel zum Absenken, beziehungsweise Anheben der Ladeplattform in ausgefahrener Position aufweist. Die Mittel zum Ausfahren der Ladeplattform weisen einen Bewegungsvergrößerer auf.

Aus der DE 20 2016 001 528 U1 ist eine Einrichtung für Krankentransportfahrzeuge zum Be- und Entladen von auf Rollstühlen sitzenden Personen bekannt. Unter dem Fahrzeugboden im seitlichen Einstieg- und Ausstiegbereich ist für den mit einer Person besetzten Rollstuhl ein flaches Behältnis so befestigt, dass es bei geschlossener Fahrzeugtür nicht unter dem Fahrzeugboden herausragt, wobei es eine schwenkbar befestigte Abschlussklappe besitzt und im Behältnis zwei elektrisch/hydraulisch aus- und einfahrbare Tragarme schwenkbar nach oben und nach unten auf einem nicht näher dargestellten Schienensystem angeordnet sind, die zwischen ihren Außenenden ein schwenkbares, klapp- und arretierbares Plattensystem tragen, welches aus einer Fußtrittplatte, schwenkbaren Zwischenplatte und einer schwenkbaren Abschlussplatte besteht.

Aus der DE 20 2005 004 145 U1 ist eine Vorrichtung zum Heben von Lasten bekannt. Der Lastträger kann mit der von ihm getragenen Last sowohl eine Lastbewegung in senkrechter und zusätzlich auch in waagerechter Richtung und in bestimmten erfindungsgemäßen Gestaltungen auch in schräger Hubrichtung ausführen.

Aus der DE 43 12 129 A1 ist ein Schrägaufzug, insbesondere für einen Rollstuhl an einem Verkehrsmittel bekannt, der eine Hebeplattform und eine Hebevorrichtung mit einem feststehenden und einem beweglichen Teil aufweist, um die Hebeplattform in eine obere und eine untere Arbeitsstellung zu bewegen. Die Hebeplattform ist am beweglichen Teil um eine waagerechte Achse um etwa 90° schwenkbar, wobei der Schrägaufzug eine in der Höhe bewegliche Schiene aufweist, die die Hebeplattform abstützt. Die waagerechte Achse ist etwa parallel zur Fahrtrichtung angeordnet. Die Hebeplattform ist nach Verschwenken um die waagerechte Achse um eine am beweglichen Teil angeordnete lotrechte Achse um etwa 180° verschwenkbar, um an der Fahrzeugmittelinnenwand etwa parallel zur Fahrtrichtung anzulegen.

Aus der FR 3 102 727 A1 ist eine Vorrichtung zur sicheren Verlagerung einer von einer Palette getragen Ladung bekannt, die an dem Chassis eines Fahrzeugs montiert ist. Sie umfasst eine bewegliche Bühne, die mittels erster Antriebsmittel vertikal und mittels zweiter Antriebsmittel in Längsrichtung des Fahrzeugchassis verstellbar ist.

Aus der WO 2014/138797 A1 ist eine Hubspeichervorrichtung bekannt, mit der Artikel in einer angehobenen Position gelagert werden können. Sie umfasst eine Hubplattform, die über zwei seitliche Schienenführungen horizontal und mittels mehrerer Linearantriebe vertikal verstellbar ist.

Die vorgenannten Vorrichtungen stellen alle sehr komplexe und aufwendige Konstruktionen dar, die aus zahlreichen Komponenten und Bauteilen bestehen und die daher nicht nur mit relativ hohen Kosten verbunden sind, sondern auch ein relativ hohes Gewicht aufweisen, was vor allem beim Einsatz an Fahrzeugen erhebliche Nachteile bedeutet.

Aufgabe der vorliegenden Erfindung ist es daher, eine kostengünstig herstellbare und kompakt ausgebildete Ladevorrichtung für ein Fahrzeug oder für ein Gebäude zu schaffen, die bei einfacher Konstruktion nur ein geringes Gewicht aufweist.

Diese Aufgabe wird erfindungsgemäß durch eine Ladevorrichtung nach Anspruch 1 gelöst. Vorteilhafte Ausgestaltungen und Weiterbildungen der Erfindung ergeben sich aus den abhängigen Ansprüchen, der nachfolgenden Beschreibung und den Figuren.

Die erfindungsgemäße Lösung sieht vor, dass die beiden beweglichen Führungsschienen über wenigstens ein Verbindungselement starr miteinander verbunden sind.

Hierdurch wird eine starre und formstabile Baugruppe gebildet, die als Ganzes relativ zu den ortsfesten Führungsschienen verlagerbar ist. Das Verbindungselement kann beispielsweise als geradlinig ausgebildeter Querträger ausgebildet sein. Dabei kann es massiv oder als Hohlkörper, beispielsweise als Vierkantrohr, ausgebildet sein.

Mit der Erfindung wird eine Ladevorrichtung bereitgestellt, zu deren Anordnung an einem Fahrzeug oder an einem Gebäude lediglich die ortsfesten Führungsschienen der horizontalen, also horizontal angeordneten sowie horizontal aus- und einfahrbaren Schienenführungen an dem Fahrzeug bzw. an dem Gebäude befestigt werden müssen. Die Montage der erfindungsgemäßen Ladevorrichtung an einem Fahrzeug oder an einem Gebäude ist somit unter sehr geringem Aufwand möglich, insbesondere auch im Rahmen einer Nachrüstung eines bereits vorhandenen Fahrzeugs.

Durch die spezielle Gestaltung der erfindungsgemäßen Ladevorrichtung bzw. der speziellen Anordnung der Bestandteile der Ladevorrichtung relativ zueinander können die Zylinderrohre der Hydraulikzylinder zusätzlich zu ihrer Hebefunktion zum Heben und Senken der Hebeplattform als Haltemittel dienen, an dem sich eine auf die Hebeplattform aufsteigende, auf der Hebeplattform befindliche und/oder von der Hebeplattform absteigende Person festhalten kann. Es müssen an der Ladevorrichtung oder an dem Fahrzeug bzw. Gebäude keine zusätzlichen Haltemittel verbaut werden, die das Gewicht eines Fahrzeugs nachteilig erhöhen würden. Die Zylinderrohre sind parallel zueinander und seitlich beabstandet voneinander angeordnet, so dass zwischen den Zylinderrohren ein ausreichender Platz für eine Person oder einen Rollstuhl vorhanden ist.

Zudem dienen die Hydraulikzylinder bzw. deren Zylinderrohre gleichzeitig als Führung für die Bewegungen der Hebeplattform, so dass auch zu diesem Zweck keine zusätzlichen Führungsmittel an dem Fahrzeug oder der Ladevorrichtung verbaut werden müssen, die das Gewicht des Fahrzeug nachteilig erhöhen würden.

Der horizontale Abstand zwischen den beiden horizontalen Schienenführungen der erfindungsgemäßen Ladevorrichtung kann im Wesentlichen einer Breite der Hebeplattform entsprechen. Beispielsweise können die horizontalen Schienenführungen derart seitlich horizontal beabstandet voneinander angeordnet sein, dass sich die Hebeplattform bei eingefahrenen Hydraulikzylindern im Wesentlichen oder vollständig zwischen den beiden horizontalen Schienenführungen bzw. deren beweglichen Führungsschienen befindet.

Die ortsfesten Führungsschienen können beispielsweise eine U-förmige Querschnittsfläche aufweisen, wobei die beweglichen Führungsschienen zumindest teilweise innerhalb der ortsfesten Führungsschienen geführt sein können. Die ortsfesten Führungsschienen können beispielsweise an einem Ladeboden oder an Seitenwänden eines Laderaums eines Fahrzeugs befestigt, beispielsweise verschraubt, werden.

Jedes Zylinderrohr bildet mit der jeweilig damit verbundenen beweglichen Führungsschiene eine starre Baugruppe, die die jeweilige vertikale Anordnungsebene definiert bzw. in dieser angeordnet ist. Hierzu ist das Zylinderrohr der jeweiligen Baugruppe quer, beispielsweise auch senkrecht, zu der beweglichen Führungsschiene dieser Baugruppe ausgerichtet. Das jeweilige Zylinderrohr kann beispielsweise über ein L-förmiges Profil mit der jeweilig damit verbundenen beweglichen Führungsschiene verbunden sein. Der Neigungswinkel des jeweiligen Zylinderrohrs zu der jeweilig damit verbundenen, horizontal ausgerichteten beweglichen Führungsschiene kann an einen Fahrzeugeinstiegswinkel angepasst sein.

Durch die starre Verbindung zwischen den beiden Kolbenstangen der Hydraulikzylinder einerseits und der Hebeplattform andererseits wird verhindert, dass sich die Hebeplattform während eines mit der erfindungsgemäßen Ladevorrichtung durchgeführten Ladevorgangs unkontrolliert neigt, was eine auf der Hebeplattform befindliche Person gefährden könnte.

Die Hebeplattform kann im Wesentlichen plattenförmig ausgebildet sein. Der Aufbau der Hebeplattform kann hinsichtlich seiner körperlichen Ausgestaltung und/oder seines Werkstoffs gewichtsoptimiert sein.

Die erfindungsgemäße Ladevorrichtung kann in einem Fahrzeug verbaut werden, das beispielsweise als Wohnmobil oder Wohnwagen ausgebildet sein kann. Außerdem kann sie auch an einem Gebäude verbaut werden, um mit ihr Hindernisse überwindbar zu machen. Die erfindungsgemäße Ladevorrichtung kann derart ausgebildet sein, dass mit ihr eine Beförderung von Rollstuhlfahrern, Gehbehinderten und/oder Bettlägerigen möglich ist.

Insgesamt stellt die vorliegende Erfindung eine konstruktiv überaus einfache und sehr kompakte Ladevorrichtung bereit, die trotzdem vielseitig anwendbare und bei einer relativ geringen Anzahl von Bauteilen nur ein geringes Gewischt aufweist und kostengünstig hergestellt werden kann.

Gemäß einer bevorzugten Ausgestaltung erstreckt sich das Verbindungselement senkrecht zu den beweglichen Führungsschienen.

Besonders vorteilhaft ist es, wenn die Schienenführungen als Teleskopschienenführungen ausgebildet sind. Hierdurch sind die Schienenführungen sehr robust und kompakt ausgebildet. Dabei können die beweglichen Führungsschienen vorteilhafterweise über wenigstens eine Wälzführung längsverschiebbar an der ortsfesten Führungsschiene geführt sein. Hierdurch wird die Reibung zwischen den Führungsschienen reduziert, was insbesondere auch den Kraftaufwand zur Verlagerung der Hebeplattform mit einer darauf befindlichen Person verringert. Die Wälzführung kann beispielsweise kugelförmige oder tonnenförmige Wälzkörper aufweisen.

Gemäß einer weiteren vorteilhaften Ausgestaltung ist das jeweilige Zylinderrohr über wenigstens ein Verbindungselement mittelbar starr mit der jeweiligen beweglichen Führungsschiene verbunden. Das Verbindungselement kann beispielsweise L-förmig ausgebildet und mit der jeweiligen beweglichen Führungsschiene und/oder mit dem jeweiligen Zylinderrohr kraftschlüssig und/oder formschlüssig und/oder stoffschlüssig verbunden sein.

Besonders vorteilhaft ist es ferner, wenn das jeweilige Zylinderrohr in einem Winkel geneigt zu der jeweiligen beweglichen Führungsschiene ausgerichtet ist, wobei der Winkel zwischen 30° und 85°, insbesondere zwischen 45° und 80° liegt und vorzugsweise 75° beträgt. Das bedeutet, dass das jeweilige Zylinderrohr nicht senkrecht, sondern unter einem von 90° abweichenden Winkel relativ zu der jeweiligen beweglichen Führungsschiene geneigt angeordnet ist. Der Neigungswinkel der beiden Zylinderrohre kann derart an eine Ausgestaltung eines Fahrzeugeinstiegs, an dem die Ladevorrichtung angeordnet werden soll, angepasst werden, dass die Zylinderrohre ihre Funktion als Haltemittel optimal erfüllen können und zudem nicht eine Funktionsweise einer an dem Fahrzeugeinstieg angeordneten Klappe oder Tür beeinträchtigen.

In dem gleichen Winkel sind dabei vorzugsweise auch die beiden Kolbenstangen geneigt zu der Hebeplattform ausgerichtet.

Gemäß einer weiteren vorteilhaften Ausgestaltung ist innerhalb des jeweiligen Zylinderrohrs wenigstens ein Hydraulikfluidkanal ausgebildet. Hierdurch kann eine Kolbenkammer des Zylinderrohrs mit einem Hydraulikfluid versorgt werden, ohne dass hierzu zusätzliche äußere Hydraulikfluidleitungen vorhanden sein und verlegt werden müssen, die zudem die Funktion der Zylinderrohre als Haltemittel für eine Person beeinträchtigen könnten. Das Zylinderrohr kann beispielsweise teilweise oder vollständig als Doppelrohrkonstruktion ausgebildet sein.

Gemäß einer besonders bevorzugten Ausführungsform wird vorgeschlagen, dass die Ladevorrichtung zwei Haltestangen aufweist, die koaxial fluchtend zu den Zylinderrohren angeordnet sind und jeweils an den der Hebeplattform abgewandten Endabschnitten der Zylinderrohre befestigt sind. Hierdurch werden die Zylinderrohre gewissermaßen nach oben bzw. von der Hebeplattform weg verlängert, um auch bei relativ kurzen Zylinderrohren ein ausreichend langes Haltemittel für Personen bereitstellen zu können. Die Haltestangen können massiv oder als Hohlzylinder ausgebildet sein. Die Haltestangen können kraftschlüssig, formschlüssig und/oder stoffschlüssig mit den Zylinderrohren verbunden sein.

Gemäß einer weiteren vorteilhaften Ausgestaltung weist die Hebeplattform eine Platte aus Blech oder aus Leichtmetall, insbesondere aus Aluminium mit einer stabilisierenden Unterkonstruktion auf. Hierdurch kann der Materialaufwand zur Herstellung der Hebeplattform reduziert werden, was wiederum mit einer Gewichtseinsparung einhergeht. Dennoch ist die Hebeplattform sehr formstabil.

Gemäß einer weiteren vorteilhaften Ausgestaltung weist die Ladevorrichtung wenigstens einen Antrieb zum Ein- und Ausfahren der beweglichen Führungsschienen auf. Der Antrieb kann elektrisch, pneumatisch oder hydraulisch ausgebildet sein. Alternativ kann die Längsverschiebung der beweglichen Führungsschienen relativ zu den ortsfesten Führungsschienen über eine manuelle Betätigung erfolgen, beispielsweise indem ein Nutzer an wenigstens einem Zylinderrohr zieht.

Besonders vorteilhaft ist es, wenn die Ladevorrichtung die folgenden Komponenten aufweist:
- wenigstens einen mit den Hydraulikzylindern verbundenen hydraulischen Antrieb,
- wenigstens eine Sensoreinheit, mit der automatisiert erfassbar ist, ob sich die beweglichen Führungsschienen in ihren vollständig ausgefahrenen Stellungen befinden, und
- wenigstens eine mit der Sensoreinheit verbundene elektrische Steuereinheit, die eingerichtet ist, eine Betätigung der Hydraulikzylinder mittels des hydraulischen Antriebs ausschließlich dann freizugeben, wenn sich die beweglichen Führungsschienen in ihren vollständig ausgefahrenen Stellungen befinden.

Hierdurch wird zuverlässig verhindert, dass die Hydraulikzylinder bereits aktiviert werden, wenn sich die Hebeplattform teilweise noch innerhalb des Fahrzeugs befindet, was zu einem Schaden an dem Fahrzeug und/oder der Ladevorrichtung führen könnte. Die Sensoreinheit kann beispielsweise eine elektrische Kontakteinrichtung sein, wobei ein elektrischer Kontakt geöffnet oder geschlossen wird, wenn die Hebeplattform ihre vollständig ausgefahrene Stellung erreicht bzw. die beweglichen Führungsschienen ihre vollständig ausgefahrenen Stellungen erreichen. Die Steuereinheit kann wenigstens einen Mikroprozessor aufweisen.

Gemäß einer besonders bevorzugten Ausführungsform der Erfindung wird vorgeschlagen, dass die Ladevorrichtung an einem Fahrzeug oder an einem Fahrzeugaufbau, vorzugsweise an dem Chassis eines Fahrzeugs angebracht wird. Bei dem Fahrzeug kann es sich insbesondere um ein Kraftfahrzeug, beispielsweise um ein Wohnmobil handeln.

Gegenstand der vorliegenden Erfindung ist insofern auch ein Fahrzeug wie etwa ein Wohnmobil, insbesondere ein Anhänger wie etwa ein Wohnwagen, das bzw. der eine Ladevorrichtung der vorangehend beschriebenen Art aufweist.

Im Folgenden wird die Erfindung unter Bezugnahme auf die beigefügten Figuren anhand einer bevorzugten Ausführungsform beispielhaft erläutert. Es zeigen:
- Figur 1a:: eine schematische Seitenansicht eines Ausführungsbeispiels für eine erfindungsgemäße Ladevorrichtung in einer Transportposition;
- Figur 1b:: eine schematische Seitenansicht der in Figur 1 gezeigten Ladevorrichtung in einer Zwischenposition;
- Figur 1c:: eine schematische Seitenansicht der in Figur 1 gezeigten Ladevorrichtung in einer Ladeposition;
- Figur 2:: eine schematische und perspektivische Darstellung der in Figur 1a gezeigten Ladevorrichtung;
- Figur 3:: eine schematische Ansicht der in Figur 1b gezeigten Ladevorrichtung von oben;
- Figur 4:: eine schematische Schnittdarstellung der in Figur 1b gezeigten Ladevorrichtung entsprechend der Schnittebene IV-IV in Figur 3;
- Figur 5:: eine schematische Schnittdarstellung eines Details der in Figur 4 gezeigten Ladevorrichtung; und
- Figur 6:: eine schematische Schnittdarstellung eines weiteren Details der in Figur 4 gezeigten Ladevorrichtung.

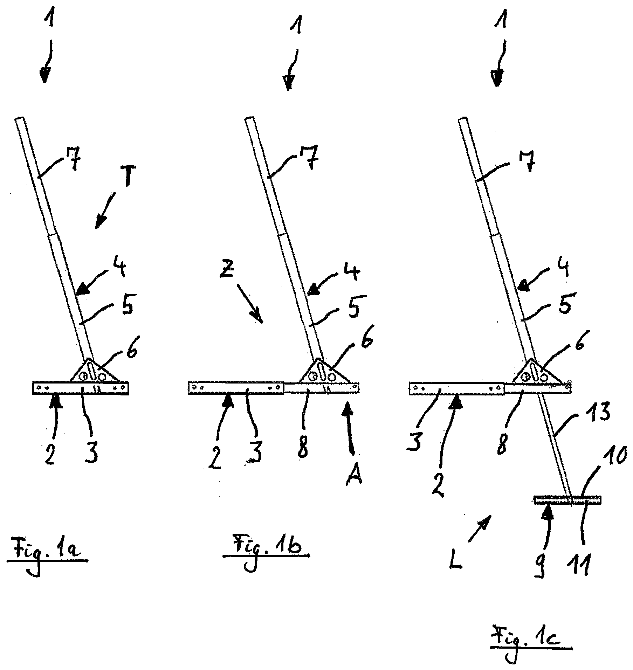

Figur 1a zeigt eine schematische Seitenansicht eines Ausführungsbeispiels für eine erfindungsgemäße Ladevorrichtung 1 für ein nicht gezeigtes Fahrzeug oder für einen nicht gezeigten Fahrzeugaufbau in einer Transportposition T.

Die Ladevorrichtung 1 weist eine Hebeplattform 9 auf, die eine Platte 10 aus Aluminium mit einer stabilisierenden Unterkonstruktion 11 umfasst.

Zudem weist die Ladevorrichtung 1 zwei seitlich beabstandet voneinander und parallel zueinander an dem Fahrzeug, vorzugsweise an dem Chassis des Fahrzeugs, oder an dem Fahrzeugaufbau montierbare horizontale Schienenführungen 2 auf, die jeweils eine ortsfeste Führungsschiene 3, welche zur Befestigung an dem Fahrzeug bestimmt ist, und eine an der ortsfesten Führungsschiene 3 längsverschiebbar geführte bewegliche Führungsschiene 8 aufweisen. Die beiden beweglichen Führungsschienen 8 sind über ein senkrecht dazu verlaufendes Verbindungselement 12 starr miteinander verbunden.

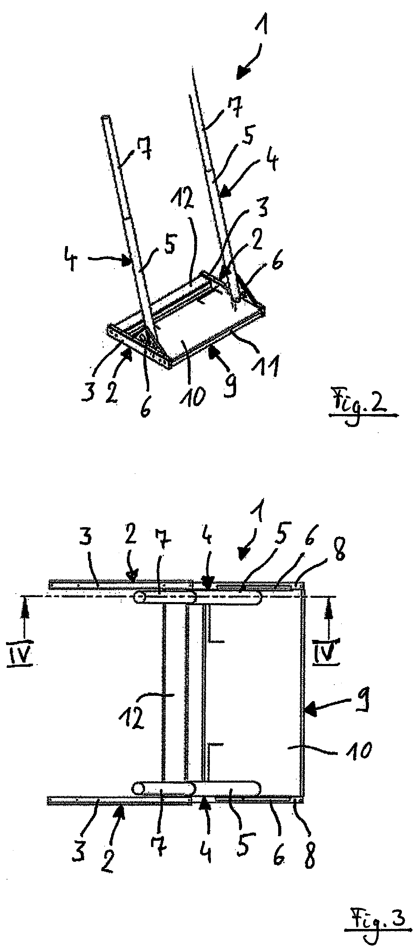

Die beiden Schienenführungen 2 sind als Teleskopschienenführungen ausgebildet. Dabei sind die beiden bewegliche Führungsschiene 8 jeweils über wenigstens eine nicht gezeigte Wälzführung an der jeweils zugehörigen ortsfesten Führungsschiene 3 längsverschiebbar geführt. Die Schienenführungen 3 sind parallel zueinander und horizontal beabstandet voneinander an den beiden Seiten der Ladevorrichtung 1 angeordnet, wie es insbesondere auch in Figur 2 gezeigt ist.

Des Weiteren weist die Ladevorrichtung 1 wenigstens einen nicht dargestellten elektrisch ansteuerbaren Antrieb auf, durch den die beweglichen Führungsschienen 8 ein- und/oder ausgefahren werden können.

Darüber hinaus weist die Ladevorrichtung 1 zwei Hydraulikzylinder 4 auf, die jeweils ein Zylinderrohr 5, einen verschiebbar in dem Zylinderrohr 5 geführten Kolben 14 und eine mit dem Kolben 14 verbundene Kolbenstange 13 umfassen. Die beiden Kolbenstangen 13 sind starr mit der Hebeplattform 9 verbunden.

Die beiden Zylinderrohre 5 sind parallel zueinander und seitlich beabstandet voneinander angeordnet, wie es insbesondere in den Figuren 2 und 3 gezeigt ist. Jedes Zylinderrohr 5 ist mit lediglich einer der beweglichen Führungsschienen 8 starr verbunden. Insbesondere ist jedes Zylinderrohr 5 über jeweils ein Verbindungselement 6 mittelbar starr mit der jeweiligen beweglichen Führungsschiene 8 verbunden. Dabei ist eine Anordnungsebene, die parallel zur Zeichenebene von Figur 1a angeordnet ist und die durch das jeweilige Zylinderrohr 5 und die jeweils damit verbundene bewegliche Führungsschiene 8 definiert wird, vertikal ausgerichtet. Innerhalb dieser Anordnungsebene ist das Zylinderrohr 5 geneigt zu der jeweiligen beweglichen Führungsschiene 8 ausgerichtet, wobei auch die Kolbenstangen 13 entsprechend geneigt zu der Hebeplattform 9 ausgerichtet sind.

Die Ladevorrichtung 1 weist außerdem zwei Haltestangen 7 auf, die koaxial fluchtend zu den Zylinderrohren 5 angeordnet sind und jeweils an den der Hebeplattform 9 abgewandten Endabschnitten der Zylinderrohre 5 befestigt sind.

Ferner ist an der Ladevorrichtung 1 ein mit den Hydraulikzylindern 4 verbundener, nicht gezeigter hydraulischer Antrieb sowie wenigstens eine nicht gezeigte Sensoreinheit, mit der automatisiert erfasst werden kann, ob sich die beweglichen Führungsschienen 8 in ihren vollständig ausgefahrenen Stellungen A der in Figur 1b dargestellten Zwischenposition Z befinden, und wenigstens eine mit der Sensoreinheit verbundene, ebenfalls nicht gezeigte elektrische Steuereinheit angeordnet, die eingerichtet ist, eine Betätigung der Hydraulikzylinder 4 mittels des hydraulischen Antriebs ausschließlich dann freizugeben, wenn sich die beweglichen Führungsschienen 8 in ihren vollständig ausgefahrenen Stellungen A befinden.

Figur 1b zeigt eine schematische Seitenansicht der in Figur 1 gezeigten Ladevorrichtung 1 in einer Zwischenposition Z. Die Zwischenposition Z geht aus der in Figur 1a gezeigten Transportposition T dadurch hervor, dass die beweglichen Führungsschienen 8 von ihren vollständig eingefahrenen Stellungen in ihre vollständig ausgefahrenen Stellungen A verlagert worden sind. Hierbei wurden auch die Hydraulikzylinder 4 entsprechend mitbewegt bzw. verlagert.

Figur 1c zeigt eine schematische Seitenansicht der in Figur 1 gezeigten Ladevorrichtung 1 in einer Ladeposition L. Die Ladeposition L geht aus der in Figur 1b gezeigten Zwischenposition Z dadurch hervor, dass die Hebeplattform 9 mittels der Hydraulikzylinder 4 auf einen nicht dargestellten Boden abgesenkt wird, wodurch indem die Kolbenstangen 13 teilweise aus den Zylinderrohren 5 ausgefahren werden.

Figur 2 zeigt eine schematische und perspektivische Darstellung der Ladevorrichtung 1. Dabei ist das senkrecht zu den Schienenführungen 2 ausgerichtete Verbindungselement 12 ersichtlich. Zudem ist die parallele Anordnung der Zylinderrohre 5 und der Haltestangen 7 zu erkennen.

Figur 3 zeigt eine schematische Ansicht der Ladevorrichtung 1 von oben. In der hier dargestellten vollständig ausgefahrenen Stellung A der beweglichen Führungsschienen 8 befindet sich das Verbindungselement 12 auch noch zwischen den ortsfesten Führungsschienen 3.

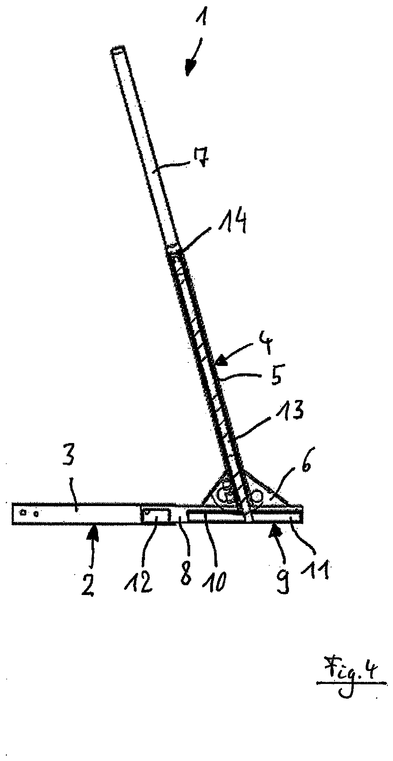

Figur 4 zeigt eine schematische Schnittdarstellung der Ladevorrichtung 1 entsprechend der Schnittebene IV-IV in Figur 3. Darin ist eine Kolbenstange 13 und deren starre Verbindung mit der Hebeplattform 9 zu erkennen. Außerdem ist der am oberen Ende der Kolbenstange 13 angeordnete Kolben 14 gezeigt.

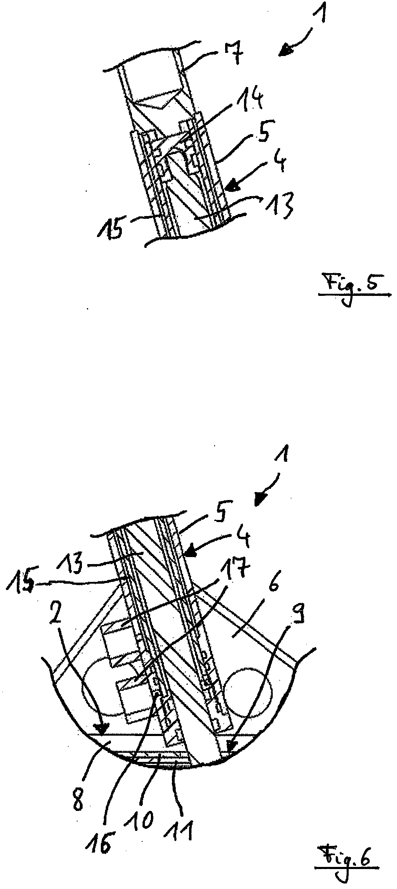

In Figur 5 ist eine schematische Schnittdarstellung eines Details der in Figur 4 gezeigten Ladevorrichtung 1 im Übergangsbereich zwischen dem Hydraulikzylinder 4 und der Haltestange 7 dargestellt. Es ist ein Hydraulikfluidkanal 15 des Zylinderrohrs 5 zu erkennen, über den ein nicht gezeigtes Hydraulikfluid derart in das Zylinderrohr 5 eingeleitet werden kann, dass sich der Kolben 14 von der Haltestange 7 wegbewegt und somit über die mit dem Kolben 14 fest verbundene Kolbenstange 13 die Hebeplattform 9 absenkt.

Figur 6 zeigt eine schematische Schnittdarstellung eines weiteren Details der in Figur 4 gezeigten Ladevorrichtung 1 in einem Übergangsbereich zwischen dem Hydraulikzylinder 4 und der Hebeplattform 9. Hier ist unter anderem ein Hydraulikfluidkanal 16 des Zylinderrohrs 5 gezeigt, über den ein nicht gezeigtes Hydraulikfluid derart in das Zylinderrohr 5 einleitbar ist, dass sich der Kolben 14 in Richtung der Haltestange 7 bewegt und somit über die mit dem Kolben 14 fest verbundene Kolbenstange 13 die Hebeplattform 9 anhebt. Ferner sind hier zwei mit den Hydraulikfluidkanälen 15 und 16 verbundene Hydraulikanschlüsse 17 des Hydraulikzylinders 5 gezeigt.

## Patentansprüche

1. Ladevorrichtung (1) für ein Fahrzeug oder ein Gebäude, umfassend
- eine Hebeplattform (9),
- zwei seitlich beabstandet voneinander an dem Fahrzeug oder an dem Gebäude anbringbare horizontale Schienenführungen (2), die jeweils eine an dem Fahrzeug oder an dem Gebäude befestigbare ortsfeste Führungsschiene (3) und wenigstens eine an der ortsfesten Führungsschiene (3) längsverschiebbar geführte bewegliche Führungsschiene (8) aufweisen,
- und zwei Hydraulikzylinder (4), die jeweils ein Zylinderrohr (5), einen verschiebbar in dem Zylinderrohr (5) geführten Kolben (14) und eine mit dem Kolben (14) verbundene Kolbenstange (13) aufweisen,
wobei die Schienenführungen (2) seitlich horizontal beabstandet voneinander angeordnet sind,
wobei die Zylinderrohre (5) parallel zueinander und seitlich beabstandet voneinander angeordnet sind, wobei jedes Zylinderrohr (5) mit lediglich einer der beweglichen Führungsschienen (8) starr verbunden ist, und wobei jedes Zylinderrohr (5) und die jeweils damit verbundene bewegliche Führungsschiene (8) jeweils eine Anordnungsebene definieren, die vertikal ausgerichtet ist,
und wobei beide Kolbenstangen (13) starr mit der Hebeplattform (9) verbunden sind.
**dadurch gekennzeichnet,**
**dass** die beiden beweglichen Führungsschienen (8) über wenigstens ein Verbindungselement (12) starr miteinander verbunden sind.

2. Ladevorrichtung (1) nach Anspruch 1, **dadurch gekennzeichnet, dass** das Verbindungselement (12) senkrecht zu den beweglichen Führungsschienen (8) verläuft.

3. Ladevorrichtung (1) nach Anspruch 1 oder 2, **dadurch gekennzeichnet, dass** die Schienenführungen (2) als Teleskopschienenführungen, insbesondere als kugelgelagerte Teleskopschienenführungen ausgebildet sind.

4. Ladevorrichtung (1) nach einem der Ansprüche 1 bis 3, **dadurch gekennzeichnet, dass** die beiden Zylinderrohre (5) jeweils über wenigstens ein Verbindungselement (6) starr mit der jeweiligen beweglichen Führungsschiene (8) verbunden sind.

5. Ladevorrichtung (1) nach einem der vorherigen Ansprüche, **dadurch gekennzeichnet, dass** die beiden Zylinderrohre (5) jeweils in einem Winkel zwischen 30° und 85°, insbesondere zwischen 45° und 80°, vorzugsweise von 75° geneigt zu der jeweiligen beweglichen Führungsschiene (8) ausgerichtet sind.

6. Ladevorrichtung (1) nach Anspruch 5, **dadurch gekennzeichnet, dass** die beiden Kolbenstangen (13) in einem Winkel geneigt zu der Hebeplattform (9) ausgerichtet sind, der gleich dem Winkel zwischen den Zylinderrohren (5) und der jeweiligen beweglichen Führungsschiene (8) ist.

7. Ladevorrichtung (1) nach einem der vorherigen Ansprüche, **dadurch gekennzeichnet, dass** zwei Haltestangen (7) jeweils koaxial fluchtend zu einem der beiden Zylinderrohre (5) an dem von der Hebeplattform (9) jeweils abgewandten Endabschnitt der Zylinderrohre (5) befestigt sind.

8. Ladevorrichtung (1) nach einem der vorherigen Ansprüche, **dadurch gekennzeichnet, dass** die Hebeplattform (9) eine Platte (10) aus Blech oder aus Leichtmetall, insbesondere aus Aluminium, mit einer stabilisierenden Unterkonstruktion (11) umfasst.

9. Ladevorrichtung (1) nach einem der vorherigen Ansprüche, **gekennzeichnet durch** wenigstens einen elektrisch ansteuerbaren Antrieb zum Verstellen der beweglichen Führungsschienen (8).

10. Ladevorrichtung (1) nach einem der vorherigen Ansprüche, **gekennzeichnet durch** wenigstens einen mit den Hydraulikzylindern (5) verbundenen hydraulischen Antrieb, wenigstens eine Sensoreinheit, mit der automatisiert erfassbar ist, ob sich die beweglichen Führungsschienen (8) in ihren vollständig ausgefahrenen Stellungen befinden, und wenigstens eine mit der Sensoreinheit verbundene elektrische Steuereinheit, die eingerichtet ist, eine Betätigung der Hydraulikzylinder (5) mittels des hydraulischen Antriebs ausschließlich dann freizugeben, wenn sich die beweglichen Führungsschienen (8) in ihren vollständig ausgefahrenen Stellungen befinden.

11. Ladevorrichtung (1) nach einem der vorherigen Ansprüche, **dadurch gekennzeichnet, dass** sie an einem Fahrzeug oder an einem Fahrzeugaufbau, vorzugsweise an dem Chassis eines Fahrzeugs angebracht ist.

12. Fahrzeug, insbesondere Kraftfahrzeug, **dadurch gekennzeichnet, dass** es eine Ladevorrichtung (1) nach einem der Ansprüche 1 bis 11 umfasst.

## Claims

1. Loading device (1) for a vehicle or a building, comprising
- a lifting platform (9);
- two horizontal rail guides (2) which are laterally spaced apart from one another and can be attached to the vehicle or building and which respectively have a stationary guide rail (3) which can be attached to the vehicle or building and at least one moveable guide rail (8) which is guided so as to be longitudinally displaceable on the stationary guide rail (3),
- and two hydraulic cylinders (4), which respectively have a cylinder tube (5), a piston (14) guided in a displaceable manner in the cylinder tube (5) and a piston rod (13) connected to the piston (14),
wherein the rail guides (2) are arranged so as to be laterally horizontally spaced apart from one another,
wherein the cylinder tubes (5) are arranged parallel to one another and laterally spaced apart from one another, wherein each cylinder tube (5) is fixedly connected to just one of the moveable guide rails (8), and wherein each cylinder tube (5) and the respective movable guide rail (8) connected thereto respectively define an arrangement plane, which is oriented vertically,
and wherein both piston rods (13) are fixedly connected to the lifting platform (9),
**characterised in that**
the two moveable guide rails (8) are fixedly connected to one another via at least one connecting element (12).

2. Loading device (1) according to Claim 1, **characterised in that** the connecting element (12) runs perpendicular to the moveable guide rails (8).

3. Loading device (1) according to Claim 1 or 2, **characterised in that** the rail guides (2) are designed as telescopic rail guides, in particular as ball bearing telescopic rail guides.

4. Loading device (1) according to one of Claims 1 to 3, **characterised in that** the two cylinder tubes (5) are respectively fixedly connected to the respective moveable guide rail (8) via at least one connecting element (6).

5. Loading device (1) according to one of the preceding claims, **characterised in that** the two cylinder tubes (5) are respectively inclined relative to the respective moveable guide rail (8) at an angle of between 30° and 85°, in particular between 45° and 80°, preferably 75°.

6. Loading device (1) according to Claim 5, **characterised in that** the two piston rods (13) are inclined relative to the lifting platform (9) at an angle which is the same as the angle between the cylinder tubes (5) and the respective moveable guide rail (8).

7. Loading device (1) according to one of the preceding claims, **characterised in that** two support rods (7) are respectively attached coaxially aligned with one of the two cylinder tubes (5) at the end section of the cylinder tubes (5) respectively facing away from the lifting platform (9).

8. Loading device (1) according to one of the preceding claims, **characterised in that** the lifting platform (9) comprises a plate (10) made of sheet metal or light metal, in particular aluminium, with a stabilising substructure (11).

9. Loading device (1) according to one of the preceding claims, **characterised by** at least one electrically controllable drive for moving the moveable guide rails (8).

10. Loading device (1) according to one of the preceding claims, **characterised by** at least one hydraulic drive connected to the hydraulic cylinders (5), at least one sensor unit, which can automatically detect whether the movable guide rails (8) are in their fully extended positions, and at least one electrical control unit connected to the sensor unit, which is designed to enable the hydraulic cylinders (5) to be actuated by means of the hydraulic drive only if the moveable guide rails (8) are in their fully extended positions.

11. Loading device (1) according to one of the preceding claims, **characterised in that** it is fitted to a vehicle or a vehicle body, preferably to the chassis of a vehicle.

12. Vehicle, in particular motor vehicle, **characterised in that** it comprises a loading device (1) according to one of Claims 1 to 11.

## Revendications

1. Dispositif de chargement (1) pour véhicule ou bâtiment, comprenant :
- une plateforme de levage (9),
- deux rails de guidage horizontaux (2) pouvant être fixés au véhicule ou au bâtiment à une distance latérale l'un de l'autre, qui présentent respectivement un rail de guidage fixe (3) pouvant être fixé au véhicule ou au bâtiment et au moins un rail de guidage mobile (8) déplaçable longitudinalement le long du rail de guidage fixe (3),
- et deux vérins hydrauliques (4), qui comportent respectivement un tube de vérin (5), un piston de vérin (14) coulissant dans le tube de vérin (5) et une tige de piston (13) reliée au piston (14),
dans lequel les rails de guidage (2) sont disposés à une distance horizontale l'un de l'autre,
dans lequel les tubes de vérin (5) sont disposés en parallèle les uns aux autres et espacés latéralement, dans lequel chaque tube de vérin (5) est fixé rigidement à un seul des rails de guidage mobiles (8) et dans lequel chaque tube de vérin (5) et le rail de guidage mobile (8) qui y est relié définissent respectivement un plan de montage, qui est aligné verticalement,
et dans lequel chaque tige de piston (13) est fixée rigidement à la plateforme de levage (9),
**caractérisé en ce que**
les deux rails de guidage mobiles (8) sont reliés rigidement l'un à l'autre par au moins un élément de liaison (12).

2. Dispositif de chargement (1) selon la revendication 1, **caractérisé en ce que** l'élément de liaison (12) s'étend perpendiculairement aux rails de guidage mobiles (8).

3. Dispositif de chargement (1) selon la revendication 1 ou 2, **caractérisé en ce que** les rails de guidage (2) sont conçus comme des rails de guidage télescopiques, notamment comme des rails de guidage télescopiques à roulements à billes.

4. Dispositif de chargement (1) selon une des revendications 1 à 3, **caractérisé en ce que** les deux tubes cylindriques (5) sont respectivement fixés rigidement au rail de guidage mobile (8) correspondant par au moins un élément de liaison (6).

5. Dispositif de chargement (1) selon une des revendications précédentes, **caractérisé en ce que** les deux tubes cylindriques (5) sont inclinés respectivement d'un angle compris entre 30° et 85°, notamment entre 45° et 80°, de préférence 75° par rapport au rail de guidage mobile respectif (8).

6. Dispositif de chargement (1) selon la revendication 5, **caractérisé en ce que** les deux tiges de piston (13) sont inclinées par rapport à la plateforme de levage (9) d'un angle égal à l'angle formé par les tubes cylindriques (5) et le rail de guidage mobile respectif (8).

7. Dispositif de chargement (1) selon une des revendications précédentes, **caractérisé en ce que** deux tiges de retenue (7) sont respectivement fixées coaxialement à un des deux tubes cylindriques (5), à l'extrémité des tubes cylindriques (5) opposée à la plateforme de levage (9).

8. Dispositif de chargement (1) selon une des revendications précédentes, **caractérisé en ce que** la plateforme de levage (9) comprend une plaque (10) en tôle ou en métal léger, notamment en aluminium, avec une sous-structure stabilisatrice (11).

9. Dispositif de chargement (1) selon une des revendications précédentes, **caractérisé par** au moins un entraînement à commande électrique pour le réglage des rails de guidage mobiles (8).

10. Dispositif de chargement (1) selon une des revendications précédentes, **caractérisé par** au moins un entraînement hydraulique relié aux vérins hydrauliques (5), au moins une unité de capteur permettant de détecter automatiquement si les rails de guidage mobiles (8) se trouvent dans leur positions d'extension maximales et au moins une unité de commande électrique reliée à l'unité de capteur, qui est configurée pour actionner les vérins hydrauliques (5) au moyen de l'entraînement hydraulique uniquement lorsque les rails de guidage mobiles (8) se trouvent dans leurs positions d'extension maximales.

11. Dispositif de chargement (1) selon une des revendications précédentes, **caractérisé en ce qu'**il est fixé à un véhicule ou à une superstructure de véhicule, de préférence au châssis d'un véhicule.

12. Véhicule, notamment un véhicule à moteur, **caractérisé en ce qu'**il comprend un dispositif de chargement (1) selon une des revendications 1 à 11.
